# EUROPÄISCHE PATENTSCHRIFT

(11) **EP 1 503 096 B1**
(45) Veröffentlichungstag und Bekanntmachung des Hinweises auf die Patenterteilung: **26.03.2008**
(21) Anmeldenummer: 04017835.2
(22) Anmeldetag: 28.07.2004
(51) Int. Cl.: F16C 35/067, F16B 37/00, F16C 35/04

(54) **Halteelement zur Fixierung wenigstens eines Lagers**
Retaining member for securing at least one bearing
Organe de retenue pour la fixation d'au moins un palier

(30) Priorität: 29.07.2003 DE 10334898
(43) Veröffentlichungstag der Anmeldung: 02.02.2005
(73) Patentinhaber: AB SKF, S-415 03 Göteborg (SE)
(72) Erfinder: Horling, Peter, 97453 Mainberg (DE); Schemmel, Bruno, 97505 Geldersheim (DE); Hauck, Helmut, 97502 Euerbach (DE); Allmann, Fred, 76887 Bad Bergzabern (DE)
(74) Vertreter: Kohl, Thomas

(56) Entgegenhaltungen:
- EP-A- 0 486 869
- DE-A1- 10 137 296
- GB-A- 1 523 184
- NL-A- 8 600 768

## Beschreibung

Die Erfindung betrifft ein Halteelement zur Fixierung wenigstens eines Lagers. Weiterhin betrifft die Erfindung ein Verfahren zur Herstellung eines derartigen Halteelements.

Halteelemente der eingangs genannten Art sind in vielfältigen Ausführungsformen bekannt und dienen insbesondere der Fixierung eines oder mehrerer Lager in einer Einbauumgebung, in der ohne den Einsatz von Halteelementen nur schwerlich eine ausreichende Fixierung der Lager erzielbar ist. Dies ist beispielsweise beim Einbau von Lagern in Getriebe von Kraftfahrzeugen der Fall, insbesondere wenn die Getriebegehäuse aus einem Leichtmetall gefertigt sind. Angesichts der dort auftretenden Temperaturwechsel, Vibrationen und sich fortwährend ändernder Lastzustände ist eine zuverlässige Fixierung der Lager durch ein einfaches Einpressen in die Getriebegehäuse in der Regel nicht gewährleistet. Mit Hilfe von Halteelementen, die mit den Getriebegehäusen verschraubt werden, kann dagegen auf relativ einfache Weise eine dauerhaft haltbare Fixierung der Lager in den Getriebegehäusen realisiert werden.

Ein dafür geeignetes Halteelement ist beispielsweise aus der DE 101 53 441 bekannt. Das dort beschriebene Halteelement besteht im wesentlichen aus einem ebenen, ringförmigen Grundkörper und ist entlang seines Umfangs an mindestens zwei Stellen an einem Gehäuse festlegbar. Das Halteelement weist an einem Abschnitt, der das Lager radial überdeckt, mindestens eine sich in Achsrichtung erstreckende Erhebung auf.

Aus der DE 101 37 296 A1 ist ein Halteelement zur Festlegung eines Maschinenteils, insbesondere eines Lagers, in einem Gehäuse bekannt. Das Halteelement weist wenigstens einen Gewindeabschnitt zur Festlegung am Gehäuse auf. An mindestens einer Seite des Halteelements ist eine ringförmig um die Achse des Gewindeabschnitts verlaufende Vertiefung ausgebildet.

Mit den bekannten Halteelementen lässt sich das Lager zwar jeweils zuverlässig am bzw. im Gehäuse fixieren. Allerdings kann es sich je nach Einbauumgebung als schwierig erweisen, das Halteelement exakt in die gewünschte Einbauposition zu bringen und die Halteschrauben, mit denen das Halteelement fixiert wird, in die dafür vorgesehenen Gewindebohrungen im Halteelement einzufädeln. Weiterhin kann es beispielsweise bei einem Einsatz eines derartigen Halteelements in einem Fahrzeuggetriebe, das mit Öl gefüllt ist, mitunter schwierig sein, die Montage des Halteelements so auszuführen, dass keine Leckage auftritt.

Der Erfindung liegt die Aufgabe zu Grunde, ein Halteelement zur Fixierung wenigstens eines Lagers an einem Maschinenteil in möglichst optimaler Weise auszubilden und insbesondere die Montage des Halteelements zu erleichtern und/oder eine zuverlässige Abdichtung im Bereich des Halteelements zu erzielen.

Diese Aufgabe wird durch die Merkmalskombination des Anspruchs 1 gelöst.

Das erfindungsgemäße Halteelement zur Fixierung wenigstens eines Lagers an einem Maschinenteil weist wenigstens zwei Aufnahmeelemente für Befestigungsmittel zur Befestigung des Halteelements am Maschinenteil auf. Die Besonderheit des erfindungsgemäßen Halteelements besteht darin, dass im Bereich wenigstens eines Aufnahmeelements ein Element zum Positionieren und Abdichten angeordnet ist.

Die Erfindung hat den Vorteil, dass die Befestigung des Halteelements am Maschinenteil keine Leckage des Maschinenteils im Bereich der Befestigungsmittel zur Folge hat, da die Elemente zum Positionieren und Abdichten diesen Bereich zuverlässig abdichten. Weitere Vorteile bestehen darin, dass die Elemente zum Positionieren und Abdichten die Befestigungsmittel gegen unbeabsichtigtes Lösen sichern und als Zentrierhilfe sowohl bei der Montage des Halteelements am Maschinenteil als auch beim Einführen der Befestigungsmittel in die Aufnahmeelemente dienen können.

Die Elemente zum Positionieren und Abdichten können die Aufnahmeelemente jeweils ringförmig umgeben. Weiterhin können die Elemente zum Positionieren und Abdichten axial über die Aufnahmeelemente überstehen. In einer vorteilhaften Ausgestaltung der Erfindung sind die Elemente zum Positionieren und Abdichten fest mit dem Halteelement verbunden. Dabei können die Elemente zum Positionieren und Abdichten insbesondere spritztechnisch auf das Halteelement aufgebracht sein. Besonders vorteilhaft ist es, wenn sich die Elemente zum Positionieren und Abdichten jeweils zur ihrer vom Halteelement abgewandten Stirnseite hin verjüngen. Durch diese konische Form wird das Einführen der Elemente zum Positionieren und Abdichten in entsprechende Vertiefungen des Maschinenteils bei der Montage des Halteelements erleichtert.

In einem bevorzugten Ausführungsbeispiel weisen die Elemente zum Positionieren und Abdichten jeweils auf ihrer Außenseite wenigstens eine umlaufende Nut auf. Dies hat den Vorteil, dass dadurch eine oder mehrere umlaufende Lamellen ausgebildet werden, mit denen sich insbesondere unter schwierigen Bedingungen bessere Abdichtungsergebnisse erzielen lassen als mit einem massiven Dichtkörper.

Im Bereich ihrer vom Halteelement abgewandten Stirnseite können die Elemente zum Positionieren und Abdichten jeweils eine sich konisch zur Stirnseite erweiternde Innenfläche aufweisen. Dies hat den Vorteil, dass das Einfädeln der Befestigungsmittel in die Aufnahmeelemente, die innerhalb der Elemente zum Positionieren und Abdichten angeordnet sind, erleichtert wird. Weiterhin können die Elemente zum Positionieren und/oder Abdichten in einer vorgegebenen Relativposition zueinander angeordnet sein. Dies trägt zum einen zu einer Erleichterung der Montage des Halteelements und zum anderen auch zu einer Erleichterung des Einfädelns der Befestigungsmittel bei.

Die Elemente zum Positionieren und Abdichten bestehen vorzugsweise aus einem Kunststoffmaterial. Alternativ dazu können die Elemente zum Positionieren und Abdichten beispielsweise auch aus einem Gummimaterial oder aus einem Metall bestehen, das eine geringere Härte als das Halteelement aufweist.

Die Aufnahmeelemente sind im bevorzugten Ausführungsbeispiel als Gewindedurchsetzungen ausgebildet. Um eine zuverlässige Fixierung der Elemente zum Positionieren und Abdichten am Halteelement zu gewährleisten, können die Elemente kraftschlüssig, stoffschlüssig oder in beide Axialrichtungen formschlüssig mit den Gewindedurchsetzungen verbunden sein.

Das Halteelement ist vorzugsweise als plattenförmiges Blechteil ausgebildet. Dies hat den Vorteil, dass eine kostengünstige Herstellung möglich ist und dennoch eine ausreichende Stabilität gewährleistet ist.

Beim erfindungsgemäßen Verfahren zur Herstellung eines Halteelements zur Fixierung wenigstens eines Lagers an einem Maschinenteil werden wenigstens zwei Aufnahmeelemente für Befestigungsmittel zur Befestigung des Halteelements am Maschinenteil ausgebildet. Das erfindungsgemäße Verfahren zeichnet sich dadurch aus, dass im Bereich der Aufnahmeelemente Material spritztechnisch aufgebracht wird.

Mit dem Material können Elemente zum Positionieren und/oder Abdichten ausgebildet werden. Vorzugsweise werden die Elemente zum Positionieren und/oder Abdichten in vorgegebenen Abständen zueinander ausgebildet.

Das Halteelement kann zum Ausbilden der Elemente zum Positionieren und/oder Abdichten wenigstens im Bereich zweier Aufnahmeelemente von einem Werkzeug fixiert werden, das die Positionen der Elemente zum Positionieren und/oder Abdichten relativ zueinander vorgibt. Dies hat den Vorteil, dass die Positionen der Elemente zum Positionieren und/oder Abdichten relativ zueinander mit sehr hoher Präzision auf einen gewünschten Wert eingestellt werden können. Ein weiterer Vorteil besteht darin, dass die Elemente zum Positionieren und/oder Abdichten jeweils an der richtigen Stelle des Halteelements angespritzt werden. Schließlich ist es noch von Vorteil, dass bei der Ausbildung der Elemente zum Positionieren und/oder Abdichten die Positionstoleranzen der Aufnahmeelemente nicht übernommen werden und diese Positionstoleranzen somit die gewünschte Genauigkeit für die Relativpositionen der Elemente zum Positionieren und/oder Abdichten überschreiten können.

Die Erfindung wird nachstehend anhand der in der Zeichnung dargestellten Ausführungsbeispiele erläutert.

Es zeigen:
- Figur 1: ein Ausführungsbeispiel eines erfindungsgemäß ausgebildeten Halteelements inklusive eines damit fixierten Wälzlagers in Schnittdarstellung,
- Figur 2: die in Figur 1 dargestellte Anordnung in Aufsicht,
- Figur 3: einen vergrößerten Ausschnitt aus Figur 1 im Bereich der Gewindedurchsetzung,
- Figur 4: einen vergrößerten Ausschnitt eines weiteren Ausführungsbeispiels des erfindungsgemäßen Halteelements während der Montage in Schnittdarstellung und
- Figur 5: einen nochmals vergrößerten Ausschnitt aus Figur 4 im Bereich des Dichtelements,
- Figur 6: das in den Figuren 4 und 5 dargestellte Ausführungsbeispiel des erfindungsgemäßen Halteelements im montierten Zustand in Schnittdarstellung und
- Figur 7: einen nochmals vergrößerten Ausschnitt aus Figur 6 im Bereich des Dichtelements.

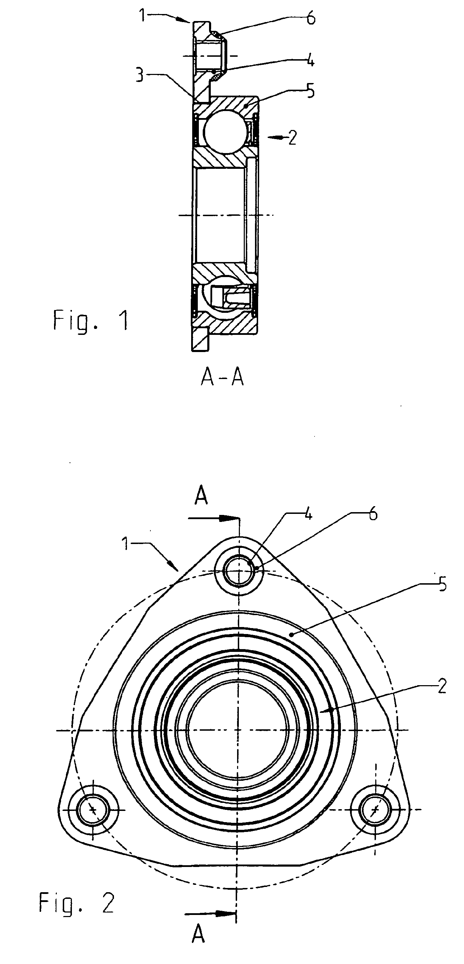

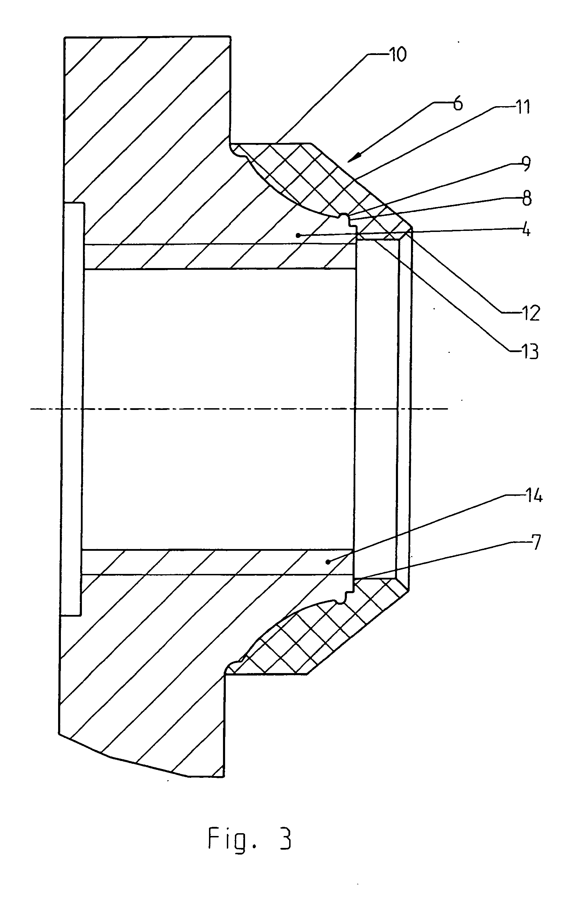

Figur 1 zeigt ein Ausführungsbeispiel eines erfindungsgemäß ausgebildeten Halteelements 1 inklusive eines damit fixierten Wälzlagers 2 in Schnittdarstellung. Eine zugehörige Aufsicht, in der auch die Schnittlinie A-A für den in Figur 1 dargestellten Schnitt eingezeichnet ist, ist in Figur 2 dargestellt. Das Halteelement 1 ist als ein plattenförmiges Blechteil ausgebildet, das eine zentrale Ausnehmung 3 zur Aufnahme des Wälzlagers 2 und drei gleichmäßig über den Umfang verteilte Gewindedurchsetzungen 4 aufweist. Das Wälzlager 2 verfügt über einen Außenring 5, der in einem Teilbereich seiner axialen Erstreckung einen reduzierten Außendurchmesser aufweist, so dass die äußere Mantelfläche des Außenrings 5 gestuft ausgebildet ist. In dem Teilbereich mit dem reduzierten Außendurchmesser ist der Außenring 5 in die zentrale Ausnehmung 3 des Halteelements 1 eingeführt. Weiterhin weist das Halteelement 1 drei Dichtelemente 6 auf, wobei je ein Dichtelement 6 eine Gewindedurchsetzung 4 in Radialrichtung umschließt. Die Dichtelemente 6 sind von wesentlicher Bedeutung für die Erfindung und werden anhand von Figur 3 näher beschrieben.

Figur 3 zeigt einen vergrößerten Ausschnitt aus Figur 1 im Bereich der Gewindedurchsetzung 4. Das Dichtelement 6 liegt mit seiner Innenseite eng an der benachbarten Außenseite der Gewindedurchsetzung 4 an. Dies kann dadurch erreicht werden, dass das Dichtelement 6 als Einzelelement gefertigt wird und über die Gewindedurchsetzung 4 gestülpt wird und optional zusätzlich kraft-, form- oder stoffschlüssig mit der Gewindedurchsetzung 4 verbunden wird, letzteres beispielsweise durch Kleben oder Vulkanisieren. Bevorzugt wird das Dichtelement 6 allerdings direkt an die Außenseite der Gewindedurchsetzung 4 angespritzt. Als Material für das Dichtelement 6 kommt insbesondere Kunststoff in Frage. Alternativ dazu ist es auch möglich, ein Gummimaterial zu verwenden oder ein weiches Metall. Um ein Lösen des Dichtelements 6 von der Gewindedurchsetzung 4 zuverlässig zu verhindern, ist beim dargestellten Ausführungsbeispiel im Bereich einer axialen Endfläche 7 der Gewindedurchsetzung 4 eine außen umlaufende Stufe 8 axial eingeprägt und dadurch dazu benachbart ein umlaufender radialer Vorsprung 9 ausgebildet, der das Dichtelement 6 in Axialrichtung formschlüssig an der Gewindedurchsetzung 4 fixiert. Dabei wird durch den radialen Vorsprung 9 insbesondere auch das durch Anspritzen an die Gewindedurchsetzung 4 hergestellte Dichtelement 6, das sich infolge der herstellungsbedingten Schrumpfung von der Gewindedurchsetzung 4 lösen kann, zuverlässig fixiert.

Die beim spritztechnisch hergestellten Dichtelement 6 durch eine Spritzgussform vorgegebene äußere Gestalt zeichnet sich dadurch aus, dass auf der Außenseite des Dichtelements 6 in Axialrichtung auf einen äußeren zylindrischen Abschnitt 10 ein äußerer konischer Abschnitt 11 folgt, der sich relativ zum äußeren zylindrischen Abschnitt 10 verjüngt und in Axialrichtung partiell über die axiale Endfläche 7 der Gewindedurchsetzung 4 übersteht. An das freie Ende des äußeren konischen Abschnitts 11 schließt sich auf der Innenseite des Dichtelements 6 ein innerer konischer Abschnitt 12 an, so dass das freie Ende des Dichtelements 6 spitz zulaufend ausgebildet ist. Schließlich erstreckt sich in Axialrichtung bis zur axialen Endfläche 7 der Gewindedurchsetzung ein innerer zylindrischer Abschnitt 13, dessen Durchmesser wenigstens so groß ist, wie der Außendurchmesser eines in die Gewindedurchsetzung 4 eingearbeiteten Gewindes 14.

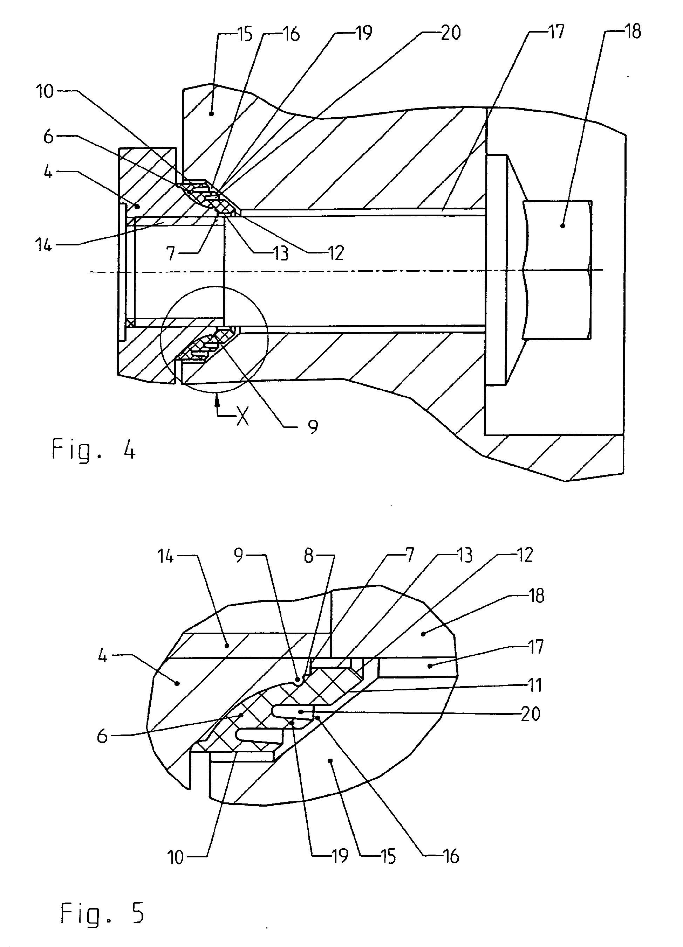

Die vorstehend beschriebene Formgebung des Dichtelements 6 kann beispielsweise in sofern variieren, als die äußere zylindrische Fläche 10 nicht exakt zylindrisch ausgebildet ist, sondern sich zum Halteelement 1 hin geringfügig erweitert. Darüber hinaus sind auch deutlichere Abweichungen von der in Figur 3 dargestellten Formgebung möglich, wie beispielsweise im einzelnen aus den Figuren 4 bis 7 hervorgeht.

Figur 4 zeigt einen vergrößerten Ausschnitt eines weiteren Ausführungsbeispiels des Halteelements 1 während der Montage in Schnittdarstellung. Ein nochmals vergrößerter Ausschnitt X im Bereich des Dichtelements 6 ist in Figur 5 dargestellt. Das Halteelement 1 wird zur Fixierung des Wälzlagers 2 mit einem Maschinenteil 15, beispielsweise einem Gehäuse eines Getriebes verschraubt. Hierzu wird das Halteelement 1 dem Maschinenteil 15 derart angenähert, dass die Dichtelemente 6 in dafür vorgesehene Vertiefungen 16 des Maschinenteils 15 eintauchen. Die konische Formgebung der Dichtelemente 6 erleichtert diesen Vorgang. Am Boden jeder Vertiefung 16 ist eine Durchgangsbohrung 17 ausgebildet, in die eine Schraube 18 von der Rückseite des Maschinenteils 1 her eingeführt und in das Gewinde 14 der Gewindedurchsetzung 4 eingeschraubt wird. Das Einfädeln der Schraube 18 in das Gewinde 14 wird durch den inneren konischen Bereich 12 des Dichtelements 6 erleichtert, der auch bei diesem Ausführungsbeispiel vorhanden ist. Ebenso ist auch der innere zylindrische Bereich 13 bei diesem Ausführungsbeispiel des Dichtelements 6 vorhanden. Der innere zylindrische Bereich 13 weist einen etwas größeren Durchmesser als die Schraube 18 auf, um ein problemloses Einführen der Schraube 18 zu ermöglichen. Weiterhin ist es auch wichtig, dass die Dichtelemente 6 möglichst exakt gemäß dem durch die Vertiefungen 16 des Maschinenteils 15 vorgegebenen Muster am Halteelement 1 angeordnet sind, damit das gleichzeitige Einführen der drei Dichtelemente 6 in die drei Vertiefungen 16 des Maschinenelements 15 problemlos gelingt und die Dichtelemente 6 zum Erzielen einer guten Abdichtung gleichmäßig eng an den Innenseiten der Vertiefungen 16 anliegen. Falls lediglich eine einfache Montage des Halteelements 1 von Bedeutung ist und keine Abdichtung erforderlich ist, kann das Halteelement 1 anstelle der Dichtelemente 6 Positionierelemente aufweisen.

Bevorzugt werden aber Dicht- und Positionierwirkung kombiniert, da dies kaum zusätzlichen Aufwand erfordert.

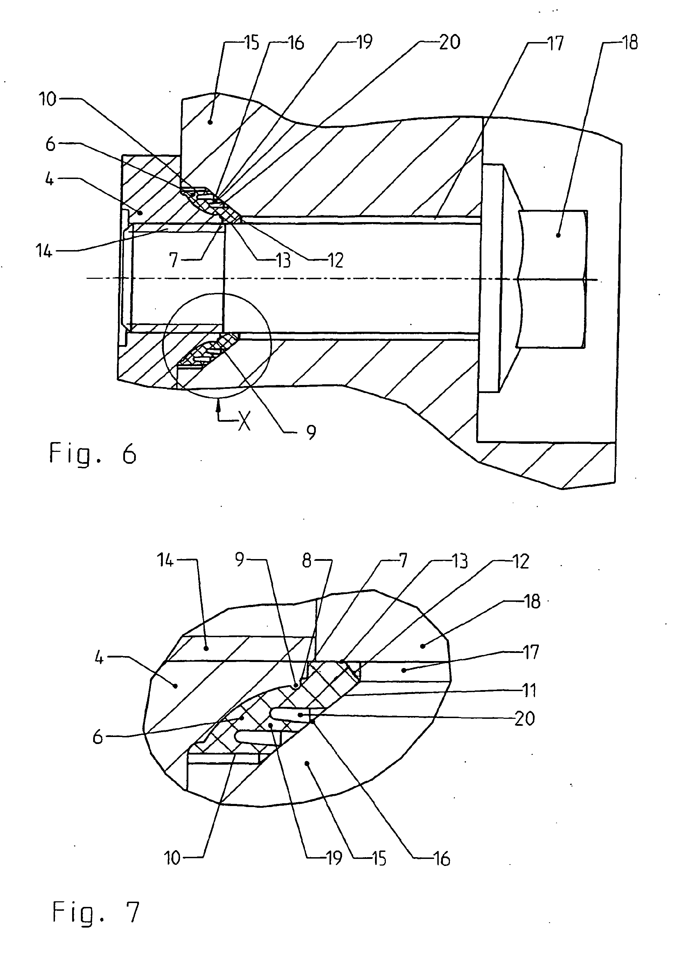

Um ein zuverlässiges Anliegen des Dichtelements 6 an der Innenwand der Vertiefung 16 insbesondere auch bei thermisch bedingten Maßänderungen der Vertiefung 16 zu gewährleisten, ist der äußere konische Abschnitt 11 des Dichtelements 6 bei dem in Figur 4 dargestellten Ausführungsbeispiel nicht durchgehend ausgebildet sondern in mehrere umlaufende Lamellen 19 unterteilt, die durch umlaufende Nuten 20 voneinander getrennt sind. Beim Einschrauben der Schraube 18 in die Gewindedurchsetzung 4 werden die Lamellen 19 gegen die Innenwand der Vertiefung 16 gepresst und dichten somit das Halteelement 1 gegen das Maschinenelement 15 ab. Ebenso wird beim Dichtelement 6 auch der axial über die zugehörige Gewindedurchsetzung 4 überstehende Bereich gegen die Innenwand der Vertiefung 16 gepresst und dabei so verformt, dass sich der innere zylindrische Bereich 13 des Dichtelements 6 der Schraube 18 annähert und schließlich gegen die Schraube 18 gepresst wird. Auf diese Weise wird eine Abdichtung des Maschinenelements 15 zur Schraube 18 hin erzielt, so dass durch das Dichtelement 6 sämtliche potentielle Leckagewege, die durch das Anbringen des Halteelements 1 am Maschinenteil 15 bedingt sind, abgedichtet werden. Diese Abdichtwirkung ist in den Figuren 6 und 7 erkennbar.

Figur 6 zeigt das Ausführungsbeispiel der Figuren 4 und 5 im montierten Zustand. Ein nochmals vergrößerter Ausschnitt Y im Bereich des Dichtelements 6 ist in Figur 7 dargestellt. Die Lamellen 19 und auch der axial über die Gewindedurchsetzung 4 überstehende Bereich des Dichtelements 6 liegen eng an der Innenwand der Vertiefung 16 des Maschinenteils 15 an, so dass keine Flüssigkeit und keine Schmutzpartikel zwischen dem Dichtelement 6 und dem Maschinenteil 15 hindurchtreten können. In entsprechender Weise liegt der innere zylindrische Bereich 13 des Dichtelements 6 fest an der Schraube 18 an, so dass auch durch das Gewinde 14 kein Flüssigkeitsaustritt und kein Eindringen von Schmutzpartikeln möglich ist.

Neben der abdichtenden Wirkung dienen die Dichtelemente 6 jeweils zusätzlich als Sicherung der Schrauben 18. Diese Schraubensicherungsfunktion entsteht dadurch, dass die Dichtelemente 6 beim Anziehen der Schrauben 18 elastisch deformiert werden und dadurch die Schrauben 18 unter Spannung halten und somit ein Lösen verhindern. Gleichzeitig wird jeweils durch die gegen die Schrauben 18 gepressten inneren zylindrischen Bereiche 13 der Dichtelemente 6 ein Verdrehen der Schrauben 18 verhindert. Die Schraubensicherungsfunktion entsteht somit ohne jeglichen Zusatzaufwand als Begleiterscheinung der Dicht- und/oder Positionierfunktion.

Wie bereits erwähnt ist eine Fixierung der Dichtelemente 6 am Halteelement 1 in einer präzise eingehaltenen Relativposition zueinander für eine problemlose Montage des Halteelements 1 sehr wichtig. Die Erfüllung dieser Vorgabe wird dadurch erschwert, dass es mitunter sehr aufwendig ist, die Gewindedurchsetzungen 4 mit dieser Präzision am Halteelement 1 auszubilden. Es wird daher im Rahmen der Erfindung ein Weg beschritten, bei dem die Gewindedurchsetzungen 4 so präzise ausgebildet werden, wie dies mit einem vertretbaren Aufwand möglich ist. Die letztendlich geforderte Präzision wird erst beim Anbringen der Dichtelemente 6 erreicht, die nicht lediglich jeweils konzentrisch zur zugehörigen Gewindedurchsetzung 4 angeordnet werden, sondern mit der geforderten Präzision relativ zueinander positioniert werden. Dabei wird zwar gleichzeitig eine möglichst gute Ausrichtung der Dichtelemente 6 an den Gewindedurchsetzungen 4 angestrebt. Durch die zwangsweise Einhaltung der Relativabstände zwischen den Dichtelementen 6 kommt es allerdings zu geringfügigen Abweichungen zwischen den Positionen der Dichtelemente 6 und den zugehörigen Gewindedurchsetzungen 4.

Die praktische Umsetzung dieser Vorgehensweise erfolgt mittels eines Werkzeugs, das drei Spritzgussformen bzw. drei entsprechende Formteile zur Ausbildung der Dichtelemente 6 aufweist, die mit der geforderten Präzision relativ zueinander angeordnet sind. Das Halteelement 1 wird von dem Werkzeug im Bereich der Gewindedurchsetzungen 4 aufgenommen, beispielsweise in dem jeweils ein Dorn in jede Gewindedurchsetzung 4 eingeführt wird. Auf diese Weise werden die Positionen der Gewindedurchsetzungen 4 des Halteelements 1 relativ zum Werkzeug ausgerichtet, wobei sich jeweils abhängig von der Toleranz bei der Fertigung der Gewindedurchsetzungen 4 eine geringe Abweichung ergeben kann. Anschließend werden die Dichtelemente 6 an das Halteelement 1 angespritzt, wobei die vorgegebenen Relativpositionen der Dichtelemente 6 mit hoher Präzision eingehalten werden. Danach wird das Halteelement 1 wieder vom Werkzeug entfernt. Das so bearbeitete Halteelement 1 verfügt über relativ zueinander präzise positionierte Dichtelemente 6 und lässt sich somit sehr passgenau mit dem Maschinenelement 15 zusammen bringen. Als einen weiteren positiven Effekt bewirkt das Umspritzen der Gewindedurchsetzungen 4 mit den Dichtelementen 6 eine Verstärkung der Gewindedurchsetzungen 4 in Radialrichtung, durch die die Ausreißkraft der Gewinde 14 erhöht wird.

### Bezugszeichen

- 1: Halteelement
- 2: Wälzlager
- 3: zentrale Ausnehmung
- 4: Gewindedurchsetzung
- 5: Außenring
- 6: Dichtelement
- 7: axiale Endfläche
- 8: Stufe
- 9: Vorsprung
- 10: äußerer zylindrischer Bereich
- 11: äußerer konischer Bereich
- 12: innerer konischer Bereich
- 13: innerer zylindrischer Bereich
- 14: Gewinde
- 15: Maschinenteil
- 16: Vertiefung
- 17: Durchgangsbohrung
- 18: Schraube
- 19: Lamelle
- 20: Nut

## Patentansprüche

1. Halteelement zur Fixierung wenigstens eines Lagers (2) an einem Maschinenteil (15), wobei das Halteelement (1) wenigstens zwei Aufnahmeelemente (4) für Befestigungsmittel (18) zur Befestigung des Halteelements (1) am Maschinenteil (15) aufweist, **dadurch gekennzeichnet, dass** im Bereich wenigstens eines Aufnahmeelements (4) ein Element (6) zum Positionieren und Abdichten angeordnet ist.

2. Halteelement nach Anspruch 1, **dadurch gekennzeichnet, dass** die Elemente (6) zum Positionieren und Abdichten die Aufnahmeelemente (4) jeweils ringförmig umgeben.

3. Halteelement nach einem der vorhergehenden Ansprüche, **dadurch gekennzeichnet, dass** die Elemente (6) zum Positionieren und Abdichten axial über die Aufnahmeelemente (4) überstehen.

4. Halteelement nach einem der vorhergehenden Ansprüche, **dadurch gekennzeichnet, dass** die Elemente (6) zum Positionieren und Abdichten fest mit dem Halteelement (1) verbunden sind.

5. Halteelement nach einem der vorhergehenden Ansprüche, **dadurch gekennzeichnet, dass** die Elemente (6) zum Positionieren und Abdichten spritztechnisch auf das Halteelement (1) aufgebracht sind.

6. Halteelement nach einem der vorhergehenden Ansprüche, **dadurch gekennzeichnet, dass** die Elemente (6) zum Positionieren und Abdichten sich jeweils zu ihrer vom Halteelement (1) abgewandten Stirnseite hin verjüngen.

7. Halteelement nach einem der vorhergehenden Ansprüche, **dadurch gekennzeichnet, dass** die Elemente (6) zum Positionieren und Abdichten jeweils auf ihrer Außenseite wenigstens eine umlaufende Nut (20) aufweisen.

8. Halteelement nach einem der vorhergehenden Ansprüche, **dadurch gekennzeichnet, dass** die Elemente (6) zum Positionieren und Abdichten jeweils im Bereich ihrer vom Halteelement (1) abgewanden Stirnseite eine sich konisch zur Stirnseite erweiternde Innenfläche (12) aufweisen.

9. Halteelement nach einem der vorhergehenden Ansprüche, **dadurch gekennzeichnet, dass** die Elemente (6) zum Positionieren und Abdichten in einer vorgegebenen Relativposition zueinander angeordnet sind.

10. Halteelement nach einem der vorhergehenden Ansprüche, **dadurch gekennzeichnet, dass** die Elemente (6) zum Positionieren und Abdichten aus einem Kunststoffmaterial, aus einem Gummimaterial oder aus einem Metall bestehen, das eine geringere Härte als das Halteelement (1) aufweist.

11. Halteelement nach einem der vorhergehenden Ansprüche, **dadurch gekennzeichnet, dass** die Aufnahmeelemente (4) als Gewindedurchsetzungen ausgebildet sind.

12. Halteelement nach Anspruch 11, **dadurch gekennzeichnet, dass** die Elemente (6) zum Positionieren und Abdichten kraftschlüssig, stoffschlüssig oder in beide Axialrichtungen formschlüssig mit den Gewindedurchsetzungen verbunden sind.

13. Halteelement nach einem der vorhergehenden Ansprüche, **dadurch gekennzeichnet, dass** es als plattenförmiges Blechteil ausgebildet ist.

14. Verfahren zur Herstellung eines Halteelements (1) zur Fixierung wenigstens eines Lagers (2) an einem Maschinenteil (15), wobei wenigstens zwei Aufnahmeelemente (4) für Befestigungsmittel (18) zur Befestigung des Halteelements (1) am Maschinenteil (15) ausgebildet werden, **dadurch gekennzeichnet, dass** im Bereich der Aufnahmeelemente (4) Material spritztechnisch aufgebracht wird.

15. Verfahren nach Anspruch 14, **dadurch gekennzeichnet, dass** mit dem Material Elemente (6) zum Positionieren und/oder Abdichten ausgebildet werden.

16. Verfahren nach Anspruch 15, **dadurch gekennzeichnet, dass** die Elemente (6) zum Positionieren und/oder Abdichten in vorgegebenen Abständen zueinander ausgebildet werden.

17. Verfahren nach einem der Ansprüche 15 oder 16, **dadurch gekennzeichnet, dass** das Halteelement (1) zum Ausbilden der Elemente (6) zum Positionieren und/oder Abdichten im Bereich zweier Aufnahmeelemente (4) von einem Werkzeug fixiert wird, das die Positionen der Elemente (6) zum Positionieren und/oder Abdichten relativ zueinander vorgibt.

## Claims

1. A retaining element for securing at least one bearing (2) on a machine part (15), wherein the retaining element (1) has at least two mounting elements (4) for fastening means (18) for fastening the retaining element (1) to the machine part (15), **characterised in that** an element (6) for locating and sealing is provided in the vicinity of at least one mounting element (4).

2. A retaining element according to Claim 1, **characterised in that** the elements (6) for locating and sealing annularly surround the respective mounting elements (4).

3. A retaining element according to any one of the preceding Claims, **characterised in that** the elements (6) for locating and sealing project axially over the mounting elements (4).

4. A retaining element according to any one of the preceding Claims, **characterised in that** the elements (6) for locating and sealing are securely connected to the retaining element (1).

5. A retaining element according to any one of the preceding Claims, **characterised in that** the elements (6) for locating and sealing are applied by an injection-moulding process on to the retaining element (1).

6. A retaining element according to any one of the preceding Claims, **characterised in that** each of the elements (6) for locating and sealing taper towards their end face remote from the retaining element (1).

7. A retaining element according to any one of the preceding Claims, **characterised in that** the elements (6) for locating and sealing each have on their outside at least one annular groove (20).

8. A retaining element according to any one of the preceding Claims, **characterised in that** the elements (6) for locating and sealing each have in the vicinity of their end face remote from the retaining element (1) an inner surface (12) widening conically towards the end face.

9. A retaining element according to any one of the preceding Claims, **characterised in that** the elements (6) for locating and sealing are arranged at a predetermined relative position to one another.

10. A retaining element according to any one of the preceding Claims, **characterised in that** the elements (6) for locating and sealing consist of a plastics material, of a rubber material or of a metal which is of lower hardness than the retaining element (1).

11. A retaining element according to any one of the preceding Claims, **characterised in that** the mounting elements (4) are in the form of threaded apertures.

12. A retaining element according to Claim 11, **characterised in that** the elements (6) for locating and sealing are connected to the threaded apertures by frictional closure, by closure with adhesive force or in a form-locking manner in both axial directions.

13. A retaining element according to any one of the preceding Claims, **characterised in that** it is in the form of a plate-like sheet part.

14. A method of producing a retaining element (1) for securing at least one bearing (2) on a machine part (15), wherein at least two mounting elements (4) for fastening means (18) for fastening the retaining element (1) to the machine part (15) are formed, **characterised in that** material is applied by an injection-moulding process in the vicinity of the mounting elements (4).

15. A method according to Claim 14, **characterised in that** elements (6) for locating and/or sealing are formed with the material.

16. A method according to Claim 15, **characterised in that** the elements (6) for locating and/or sealing are formed at predetermined distances apart.

17. A method according to either one of Claims 15 or 16, **characterised in that** the retaining element (1) for forming the elements (6) for locating and/or sealing is secured in the vicinity of at least two mounting elements (4) by a tool which predetermines the positions relative to one another of the elements (6) for locating and/or sealing.

## Revendications

1. Organe de retenue pour maintenir au moins un palier (2) sur une pièce de machine (15), ledit organe de retenue (1) présentant au moins deux éléments de réception (4) pour des moyens de fixation (18) destinés à fixer l'organe de retenue (1) à la pièce de machine (15), **caractérisé par le fait qu'**un élément (6) de positionnement et d'étanchéité est disposé dans la région d'au moins un élément de réception (4).

2. Organe de retenue selon la revendication 1, **caractérisé par le fait que** les éléments (6) de positionnement et d'étanchéité entourent sous une forme annulaire les éléments de réception (4) respectifs.

3. Organe de retenue selon une des revendications précédentes, **caractérisé par le fait que** les éléments (6) de positionnement et d'étanchéité dépassent axialement par rapport aux éléments de réception (4).

4. Organe de retenue selon une des revendications précédentes, **caractérisé par le fait que** les éléments (6) de positionnement et d'étanchéité sont liés solidement à l'organe de retenue (1).

5. Organe de retenue selon une des revendications précédentes, **caractérisé par le fait que** les éléments (6) de positionnement et d'étanchéité sont réalisés par moulage par injection sur l'organe de retenue (1).

6. Organe de retenue selon une des revendications précédentes, **caractérisé par le fait que** les éléments (6) de positionnement et d'étanchéité se rétrécissent chacun en direction de sa face frontale opposée à l'organe de retenue (1).

7. Organe de retenue selon une des revendications précédentes, **caractérisé par le fait que** les éléments (6) de positionnement et d'étanchéité présentent au moins une rainure périphérique (20) sur leur face extérieure.

8. Organe de retenue selon une des revendications précédentes, **caractérisé par le fait que** les éléments (6) de positionnement et d'étanchéité, dans la région de leur face frontale opposée à l'organe de retenue (1), présentent chacun une surface intérieure (12) qui s'élargit sous forme de cône en direction de la surface frontale.

9. Organe de retenue selon une des revendications précédentes, **caractérisé par le fait que** les éléments (6) de positionnement et d'étanchéité sont disposés dans une position relative prédéterminée les uns par rapport aux autres.

10. Organe de retenue selon une des revendications précédentes, **caractérisé par le fait que** les éléments (6) de positionnement et d'étanchéité sont réalisés à partir de matière plastique, de caoutchouc ou de métal, qui présentent une dureté inférieure à celle de l'organe de retenue (1).

11. Organe de retenue selon une des revendications précédentes, **caractérisé par le fait que** les éléments de réception (4) sont réalisés sous forme d'éléments traversés d'un taraudage.

12. Organe de retenue selon la revendication 11, **caractérisé par le fait que** les éléments (6) de positionnement et d'étanchéité sont liés par adhérence, par matière ou par obstacle, dans les deux directions axiales, aux éléments traversés d'un taraudage.

13. Organe de retenue selon une des revendications précédentes, **caractérisé par le fait qu'**il est réalisé comme pièce de tôle en forme de plaque.

14. Procédé de fabrication d'un organe de retenue (1) pour maintenir au moins un palier (2) sur une pièce de machine (15), sachant qu'au moins deux éléments de réception (4) pour des moyens (18) de fixation de l'organe de retenue (1) à la pièce de machine (15) sont réalisés, **caractérisé par le fait que** de la matière est appliquée par moulage par injection dans la région des éléments de réception (4).

15. Procédé selon la revendication 14, **caractérisé par le fait que** la matière sert à réaliser des éléments (6) de positionnement et/ou d'étanchéité.

16. Procédé selon la revendication 15, **caractérisé par le fait que** les éléments (6) de positionnement et/ou d'étanchéité sont réalisés avec des distances réciproques prédéterminées.

17. Procédé selon une des revendications 15 ou 16, **caractérisé par le fait que**, pour la réalisation des éléments (6) de positionnement et/ou d'étanchéité dans la région de deux éléments de réception (4), l'organe de retenue (1) est maintenu par un outil qui prédéfinit les positions réciproques des éléments (6) de positionnement et/ou d'étanchéité.
